# EUROPEAN PATENT SPECIFICATION

(11) **EP 0 454 217 B1**
(45) Date of publication and mention of the grant of the patent: **28.02.1996**
(21) Application number: 91200889.3
(22) Date of filing: 16.04.1991
(51) Int. Cl.: H04L 12/56

(54) **Transmission system with recording of untransmitted packets**
Übertragungssystem zur Aufzeichnung von nichtübertragenden Paketen
Système de transmission avec enregistrement des paquets non transmis

(30) Priority: 23.04.1990 NL 9000962
(43) Date of publication of application: 30.10.1991
(73) Proprietor: Koninklijke PTT Nederland N.V., NL-2509 CH The Hague (NL)
(72) Inventor: Brandt, Dick, NL-2274 AA Voorburg (NL); van Loo, Gerrit Jan, NL-2624 SB Delft (NL); van der Wal, Jacob Cornelis, NL-2613 VE Delft (NL)

(56) References cited:
- EP-A- 0 293 315
- WO-A-86/03085
- US-A- 4 561 090
- PROCEEDINGS OF THE INTERNATIONAL SEMINAR, Zürich, 11th - 13th March 1986, pages A.3.1-A.3.8; J.S. Turner: "New directions in communications"

## Description

### A. BACKGROUND OF THE INVENTION

### 1. Field of the invention

The invention relates to a transmission system for transmitting packets which comprise an information word group and a control word group, the control word group comprising an identification of the packet type such as an identification of the virtual transmission channel and/or of the group of virtual transmission channels via which the packet is being transmitted, which transmission system comprises access control means for granting or refusing said packets access to the part of the transmission system situated downstream of the access control means, depending on the incoming volume of packets, and an error reporting device for recording packets not admitted to the downstream part of the transmission system by the access control means.

### 2. Prior art

Refererences 1 and 2 describe transmission systems within the field of ATM (Asynchronous Transfer Mode), in which data packets (data cells) are admitted or refused to the downstream part of the transmission system on the basis of, for example, the mean arrival frequency of said packets or on the basis of another criterion. Preferably, the transmission of packets per transmission channel (or group of channels) is monitored, a certain limit therefore being imposed per transmission channel (or group) on the number of packets which, for example, are transmitted per unit time to the downstream system. A drawback of the known transmission systems is that, as soon as the number of packets (of a particular sort) becomes too large, the packets are discarded. Discarding packets is, however, entirely to be approved since (normally) it could have been prevented by the provider of the packets, the user of the relevant transmission channel: the user must not, for example, exceed a particular maximum frequency, on pain of losing packets. A drawback of the transmission systems known from reference 1 and 2 is that there is in fact no control on the discarding of packets. The transgression of the maximum permitted packet input frequency may in fact be the consequence either of a deliberate attempt by the user to transmit more packets per unit time than he is permitted, or of a lack of checking on his part on the possible transgression of the maximum. It may be important to know if a transgression is occasional and of little significance or is frequent and appreciable. Especially if the transgression is appreciable and prolonged, there is a very real chance that the transgression is the consequence of a technical fault in the user's equipment or in the equipment of the transmission system manager.

Reference 3 discloses a packet switch which is governed by a control unit establishing virtual circuits between its input junctions and output junctions. A framing circuit connected to an input junction extracts packet labels for comparison with those stored in a register. A pulse is delivered to a reversible counter which instructs a control unit to destroy correspondingly labelled packets from that input junction whenever the count attains a predetermined overflow value. The instruction causes the packet switch to inform the communicating source that packets have been lost, and to request a reduction in its data rate.

Another error reporting system is disclosed in reference 4, in which each of a number of central processors is responsive to a receipt of the setup packet to store logical to physical address translation information in memories of its associated trunk controllers. The physical address defines a path through the switching network to an output trunk controller in the communication path to the destination terminal. In response to the receipt of a subsequent message packet, each trunk controller utilises its memory information for translation and the assemblage of a new packet containing the physical address plus the message packet. The controller then sends the new packet to the switching network. The switch nodes within the network are responsive to the physical address in the new packet for establishing the physical path to the output trunk controller. The detection circuit within a packet switch node determines the difference between the number of packets received by the node and the number of packets transmitted by the node and indicates an error condition within the node if the difference falls outside an allowable range.

### B. SUMMARY OF THE INVENTION

The invention provides the fulfilment of the need to be able to form a picture of the nature and extent of the packets not admitted, however, generating only a minimum amount of error signals and thus preventing an overflow of error messages, by providing means for improved processing of multiple threshold crossings. The invention provides a transmission system of the type mentioned under A, which is characterised in that the error reporting device comprises a first recording device for recording, under the control of control means and the access control means mentioned, the packet types of the packets not admitted to the downstream transmission system insofar as such a packet type has not already been recorded in said first recording device, and for delivering a signal after such a recording to the control means to prevent multiple recording of said packet type in said first recording device. The error reporting device further comprises at least one counting device for maintaining, under the control of the control means and the access control means, for each packet type a counter position which is altered in a particular direction if a packet of the relevant packet type is not transmitted by the access control means and which is altered in the opposite direction in proportion to the time lapse. Moreover, said at least one counting device is arranged to compare the counter position of the relevant packet type with a threshold value and to emit a signal if said threshold value is exceeded, said signal being used by the control means to generate an error report message. The counting device is preferably a "leaky bucket" device whose operation is known per se, inter alia, from the references. Moreover, provision can be made that the error reporting device comprises a second recording device for recording, under the control of the counting device and of the control means, the packet type of the packets which cause the threshold value to be exceeded, insofar as such a packet type has not already been recorded in said second recording device, and for emitting, after such a recording, a signal to the control means to prevent multiple recording of said packet type in the second recording device, said signal being used by the control means to generate an error report message. Finally, provision is preferably made that such a counting device is used in a time-shared manner in which, if a packet is not transmitted by the access control means, the control means mentioned set the relevant parameters, including the last counter position associated with the relevant packet type, in the counting device. Said time-shared use of the counting device (or of a number of counting devices which each maintain a counter position, relating to the same packet type, but with different parameters) achieves the result that a single, separate counting device (or even a number of counting devices) is not necessary for each packet type. In this preferred embodiment, the parameters needed to perform a counting operation are therefore always delivered by the control means. However, the operation of the time-shared use of a counting device is known per se from reference 2. An preferred embodiment of the invention will be explained in more detail below.

### C. REFERENCES

1. Kowalk, W. and Lehnert, R.
   The 'policing function' to control user access in ATM networks - definition and implementation ISSLS 88: Int. Symp. Subscriber Loops and Services; Proc. IEEE Sept. 1988, pp 240-245
2. EP-A-0381275 90.08.08
3. EP-A-0293315 88.11.30
4. US-A-4561090 85.12.24

### D. EXEMPLARY EMBODIMENTS

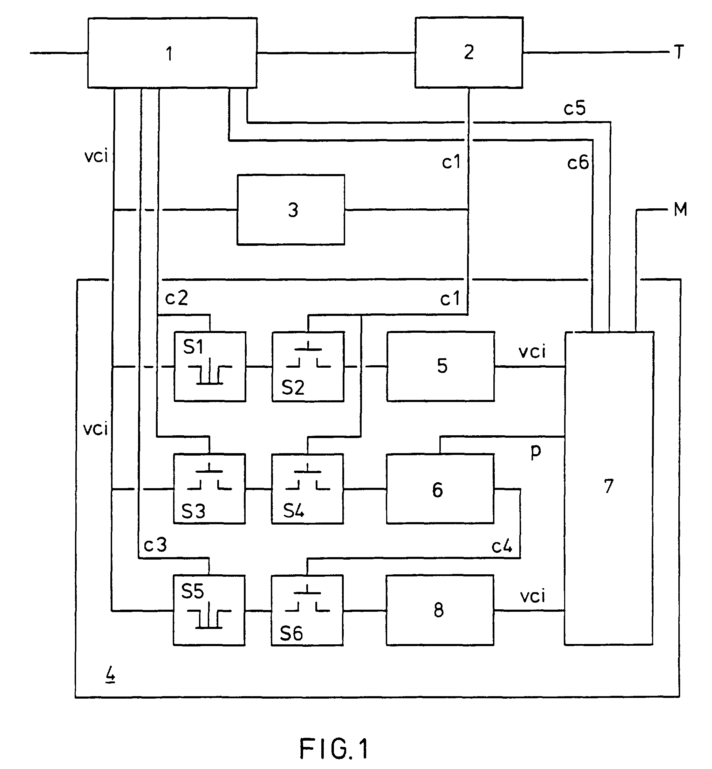

Figure 1 shows an exemplary embodiment of the invention. A packet is fed to a read-out device 1 in which, inter alia, the control word group is read out. Said control word group comprises a type identification of said packet which relates to the virtual transmission channel via which said packet has to be transmitted. Hereinafter, the term "channel identification" will be used; in the figure this is represented by "vci" (virtual channel identifier). The read-out device 1 also emits, on the basis of the channel identification (or other type identification) read out and of parameters related to said identification, control signals c2 and c3, respectively, when a packet arrives for the purpose of controlling an error reporting device 4. These are essentially intended to prevent the situation that, in the event of an excess input of packets on a particular virtual channel, the input will repeatedly be processed and reported by the error reporting device 4 on the arrival of each subsequent packet in said channel. These control signals therefore bring about an efficient errorprocessing and signalling. The parameters in the read-out device 1 are controlled by means of control signals c5 and c6, respectively, originating from the error reporting device 4. After the channel identification (inter alia) has been read out, a monitoring device 3 is activated and this maintains, on the basis of the parameters valid for the relevant transmission channel, a counter position (or a number of counter positions). Whenever a packet having the relevant channel identification presents itself, said counter position is increased by a certain value or factor. If no packets having the channel identification present themselves during a certain time, said counter position is reduced in proportion to the time elapsing. The counter position is always compared with a particular threshold value. Provided said threshold value, which may be different for each channel, is not exceeded, a switching device 2 is informed by means of a control signal c1 that said packet can be switched through to the downstream transmission system T. However, as soon as the threshold value mentioned is in fact exceeded when the counter position is increased under the influence of the arrival of the packet, the switching device 2 is informed that the last packet, which was, after all, responsible for the threshold value being exceeded, must not be switched through to the transmission system T. The foregoing is known per se from the abovementioned references.

According to the invention, the error reporting device 4 is thus provided which records (for example) the transgressions of the relevant threshold values for each transmission channel in order to thereby obtain an insight into, for example, the frequency and seriousness of said transgressions and in order, moreover, to generate an error report signal or message if the transgressions take on a very serious form. The error reporting device 4 is formed, to an important extent, by a counting device 6 which functions in a similar way to the counting device 3. Both devices may be formed, for example, by a so-called "leaky bucket" device. In such a device, a counter position is increased as soon as a particular event, such as the arrival of a packet, occurs, whereas the counter position is reduced again in proportion to the time, the counter position always being compared with a particular threshold value and a particular error signal being emitted if said threshold value is exceeded. Like the threshold value, the extent to which the counter position is increased or reduced may be fixed, but these are preferably capable of being set as parameters. The error reporting device 4 furthermore comprises a control device 7, for example a microprocessor, which provides for the setting of the relevant parameters p and, furthermore, generates and sends out an error report message M in the event of a very serious transgression. The error reporting device 4 furthermore comprises two channel number memories 5 and 8, and also six switching devices S1...S6.

If a packet now appears at the input of the read-out device 1 and said packet causes the relevantthreshold value to be exceeded in the counting device 3, as a result of which the counting device 3 delivers to the switching device 2 a control signal c1 that said packet must not be transmitted, said control signal c1 is also fed to the switching device S2, as a consequence of which the channel identification of the packet is written, via switching device S1 and switching device S2, into the memory device 5, which is read out by the control device 7. Said control device 7 then gives the read-out device 1 a control signal c5, as a result of which a parameter is set in said read-out device 1 indicating that whenever packets arrive having the same channel identification as the particular packet which caused the threshold value to be exceeded in the counting device 3, a control signal c2 must be provided from said read-out device 1 to the switches S1 and S3. The consequence of said setting effected in the read-out device 1 from the control device 7 is that, if a packet then appears which has the same channel identification as the packet which caused the threshold value to be exceeded in the counting device 3, the switching device S1 is controlled by means of the control signal c2 in a manner such that said channel identification is not transmitted again to the memory device 5, despite the fact that the switching device S2 will in fact be reactivated (closed) in that case by means of the control signal c1. If a packet having the channel identification mentioned appears, the control signal c2 will, in addition, activate the switching device S3, as a result of which thecounter position of the counting device 6 for the channel identification will be updated since the control signal c1 also activates the switching device S4 if the threshold value is exceeded in the counting device 3. The updated counter position in the counting device 6 is then compared with a (second) threshold value, the status remaining unchanged if said threshold value is not exceeded. However, if the threshold value in counting device 6 is in fact exceeded as a consequence of the arrival of a packet, said device delivers a control signal c4 to the switching device S6, which is then activated. As a consequence of this, the channel identification of the packet is now written into the memory device 8 from the read-out device 1 and then transmitted to the control device 7. The control device 7 now transmits an error report message M, as a result of which the system manager is informed that the input of packets of the relevant channel identification so often causes the threshold value to be exceeded in the counting device 3 that (even) in the counting device 6 the threshold value set therein is exceeded, which indicates that the excess input of packets of said channel type is so large that it has to be signalled since intervention will presumably be necessary. In order to prevent said reports being repeated as long as said notorious transgression of the input limit continues, a control signal c6 is also transmitted to the read-out device 1 by the control device 7, as a result of which a parameter is set in said read-out device 1 which is such that, if packets of saidrelevant channel type present themselves thereafter, the read-out device 1 sends a control signal c3 to the switching device S5, as a result of which said switching device S5 prevents said channel identification being written into the memory device 8 again.

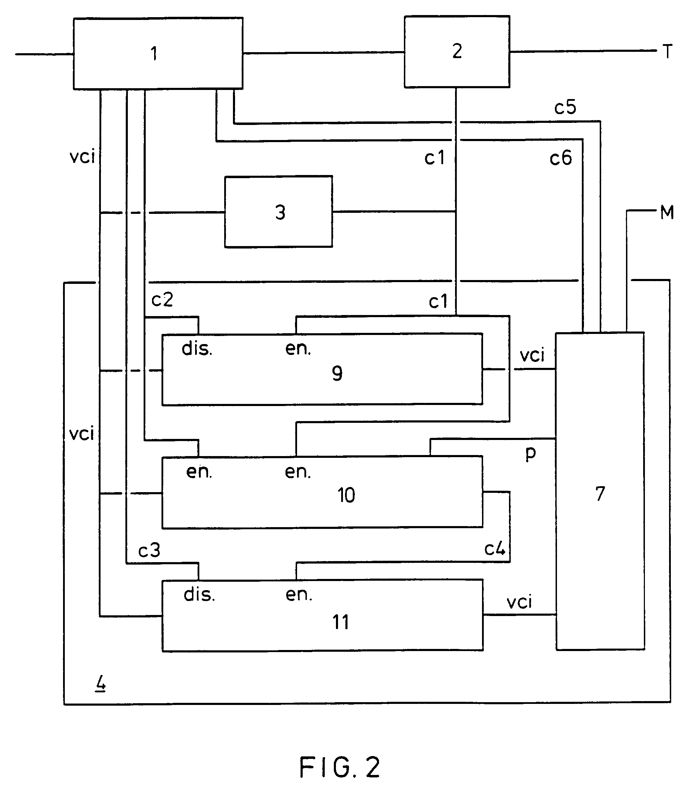

It is pointed out that the abovementioned switching devices, together with the devices they operate, if constructed with modern electronic components, form a single entity with one another, i.e. S1, S2 and memory device 5, or S3, S4 and counting device 6, or S5, S6 and memory device 8. The control signals c1, c2, c3 and c4 are then applied to the relevant "enable" or "disable" terminals. All this is elaborated in Figure 2. In this figure, the devices S1, S2 and 5 have been replaced by a memory device 9, as have the devices S3, S4 and 6 by a "leaky bucket" device 10 and the devices S5, S6 and 8 by a memory device 11. The respective control signals c1...c4 are connected to the relevant "enable" or "disable" terminals, indicated by "en." or "dis.", respectively.

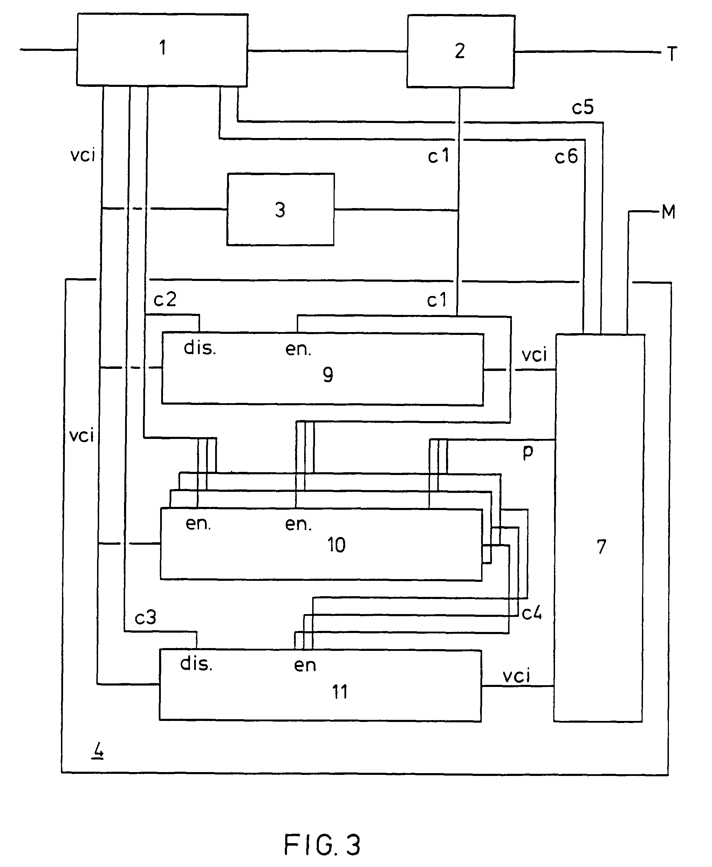

Finally, it is pointed out that the counting device 6 or 10 is used in a time-shared manner. Whenever a packet is refused by the access device 3, the control device 7 "loads" the parameters p associated with the relevant channel, with which the counting operation is then carried out, into the counting device 6 or 10. In the case of a subsequent packet which is not transmitted, parameters associated with the channel of said packet are then again loaded, etc. Although only one counting device 6 or 10 is indicated in Figures 1 and 2 for the sake of a clear understanding, it is also possible, as indicated in Figure 3, to provide that not one, but several counter positions are maintained for each channel (one counter position for each counting device 6 or 10) with different parameters, of which, for example, one relates to the short-term average and a second to the long-term average (these can be set by the parameter which controls the degree of reduction of the counter position as a function of time) and of which the threshold values may therefore be different. The different counting devices (three are indicated in Figure 3) can then, for example, separately give an "enable" signal to the memory device 11, as a result of which said memory device 11 is "enabled" (apart from any "disabling" by means of c3) if one of the counting devices signals transgression of the relevant threshold value. It is also possible to present the "enable" signals to the memory device 11 via a multiple OR gate (or, if desired, AND gate).

## Claims

1. Transmission system for transmitting packets which comprise an information word group and a control word group, the control word group comprising an identification of the packet type such as an identification of the virtual transmission channel and/or of the group of virtual transmission channels via which the packet is being transmitted, which transmission system comprises access control means for granting or refusing said packets access to the part of the transmission system situated downstream of the access control means, depending on the incoming volume of packets, and an error reporting device for recording packets not admitted to the downstream part of the transmission system by the access control means, **characterised** in that the error reporting device (4) comprises a first recording device (5, S1, S2; 9) for recording under the control of control means (1, 7) and said access control means (2, 3), the packet types of the packets not admitted to the downstream transmission system (T) insofar as such a packet type has not already been recorded in said first recording device, and for delivering a signal after such a recording to the control means to prevent multiple recording of said packet type in said first recording device and in that the error reporting device (4) further comprises at least one counting device (6, S3, S4; 10) for maintaining, under the control of the control means (1, 7) and the access control means (2, 3), for each packet type a counter position which is altered in a particular direction if a packet of the relevant packet type is not transmitted by the access control means and which is altered in the opposite direction in proportion to the time lapse, said at least one counting device (6, S3, S4; 10) being arranged to compare the counter position of the relevant packet type with a threshold value and to emit a signal (c4) if said threshold value is exceeded, said signal being used by the control means (7) to generate an error report message (M).

2. Transmission system according to Claim 1, characterised in that said at least one counting device (6, S3, S4; 10) is a "leaky bucket" device.

3. Transmission system according to Claim 1, characterised in that the error reporting device (4) comprises a second recording device (8, S5, S6; 11) for recording, under the control of the counting device (6, S3, S4; 10) and of the control means (1), the packet type of the packets which cause the threshold value to be exceeded, insofar as such a packet type has not already been recorded in said second recording device, and for emitting, after such a recording, a signal to the control means to prevent multiple recording of said packet type in the second recording device, said signal being used by the control means (7) to generate an error report message (M).

## Patentansprüche

1. Übertragungssystem zum Übertragen von Paketen, die eine Informationswortgruppe und eine Steuerwortgruppe umfassen, wobei die Steuerwortgruppe eine Identifikation des Pakettyps umfasst, wie beispielsweise eine Identifikation des virtuellen Übertragungskanals und/oder der Gruppe virtueller Übertragungskanäle, über welche das Paket übertragen wird, wobei dieses Übertragungssystem Zugangssteuermittel umfasst, um diesen Paketen den Zugang zu dem Teil des Übertragungssystems, der sich stromabwärts von diesen Zugangssteuermitteln befindet, zu gewähren oder zu verweigern, in Abhängigkeit des eintreffenden Paketvolumens, und eine Fehlermeldevorrichtung zum Aufzeichnen von Paketen, die von den Zugangssteuermitteln nicht zum stromabwärtsliegenden Teil des Übertragungssystems zugelassen werden, **dadurch gekennzeichnet, dass** die Fehlermeldevorrichtung (4) eine erste Aufzeichnungsvorrichtung (5, S1, S2; 9) umfasst zum Aufzeichnen, unter Steuerung von Steuermitteln (1, 7) und von diesen Zugangssteuermitteln (2, 3), der Pakettypen der nicht zum stromabwärtsliegenden Übertragungssystem (T) zugelassenen Paketen insofern ein solcher Pakettyp nicht bereits schon in dieser ersten Aufzeichnungsvorrichtung aufgezeichnet worden ist, und zum Abgeben eines Signals nach einer solchen Aufzeichnung an die Steuermittel, um eine Mehrfachaufzeichnung dieses Pakettyps in dieser ersten Aufzeichnungsvorrichtung zu verhindern, und dass die Fehlermeldevorrichtung (4) weiter mindestens eine Zählvorrichtung (6, S3, S4; 10) umfasst zum Aufrechterhalten, unter Steuerung der Steuermittel (1, 7) und der Zugangssteuermittel (2, 3), einer Zählerposition für jeden Pakettyp, die in einer bestimmten Richtung verändert wird, wenn ein Paket des relevanten Pakettyps von den Zugangssteuermitteln nichtübertragen wird, und die im Verhältnis zur verstrichenen Zeit in die entgegengesetzte Richtung verändert wird, wobei diese zumindest eine Zählvorrichtung (6, S3, S4; 10) eingerichtet ist, um die Zählerposition des relevanten Pakettyps mit einem Schwellenwert zu vergleichen, und um ein Signal (c4) abzugeben, wenn dieser Schwellenwert überschritten wird, wobei dieses Signal von den Steuermitteln (7) verwendet wird, um eine Fehlermeldungsmitteilung (M) zu erzeugen.

2. Übertragungssystem nach Anspruch 1, **dadurch gekennzeichnet, dass** die besagte mindestens eine Zählvorrichtung (6, S3, S4; 10) eine sogenannte "leaky bucket"-Vorrichtung ist.

3. Übertragungssystem nach Anspruch 1, **dadurch gekennzeichnet, dass** die Fehlermeldevorrichtung (4) eine zweite Aufzeichnungsvorrichtung (8, S5, S6; 11) umfasst zum Aufzeichnen, unter Steuerung der Zählvorrichtung (6, S3, S4; 10) und der Steuermittel (1), des Pakettyps der Pakete, die bewirken, dass der Schwellenwert überschritten wird insofern ein solcher Pakettyp nicht bereits in dieser zweiten Aufzeichnungsvorrichtung aufgezeichnet worden ist, und zum Abgeben nach einer solchen Aufzeichnung eines Signals an die Steuermittel, um zu verhindern, dass eine Mehrfachaufzeichnung dieses Pakettyps in der zweiten Aufzeichnungsvorrichtung vorkommt, wobei dieses Signal von den Steuermitteln (7) verwendet wird, um eine Fehlermeldungsmitteilung (M) zu erzeugen.

## Revendications

1. Système de transmission pour transmettre des paquets qui comprennent un groupe de mots d'information et un groupe de mots de commande, le groupe de mots de commande comprenant une identification du type de paquet, comme une identification de la voie de transmission virtuelle et/ou du groupe de voies de transmission virtuelles par lesquelles le paquet est transmis, lequel système de transmission comprend : un moyen de commande d'accès pour permettre ou interdire auxdits paquets l'accès à la partie du système de transmission située en aval du moyen de commande d'accès, en fonction du volume de paquets entrant ; et un dispositif de compte rendu d'erreur pour enregistrer les paquets non admis dans la partie aval du système de transmission par le moyen de commande d'accès, caractérisé en ce que le dispositif de compte rendu d'erreur (4) comprend un premier dispositif d'enregistrement (5, S1, S2 ; 9) pour enregistrer, sous les ordres du moyen de commande (1, 7) et dudit moyen de commande d'accès (2, 3), les types de paquet des paquets non admis dans le système de transmission aval (T), dans la mesure où un tel type de paquet n'a pas déjà été enregistré dans ledit premier dispositif d'enregistrement, et pour délivrer, après un tel enregistrement, un signal au moyen de commande pour prévenir l'enregistrement multiple dudit type de paquet dans ledit premier dispositif d'enregistrement ; et en ce que le dispositif de compte rendu d'erreur (4) comprend en outre au moins un dispositif de comptage (6, S3, S4 ; 10) pour entretenir, sous les ordres du moyen de commande (1, 7) et du moyen de commande d'accès (2, 3), pour chaque type de paquet, une position de compteur qui est modifiée dans un sens particulier si un paquet du type de paquet en question n'est pas transmis par le moyen de commande d'accès et qui est modifiée dans le sens contraire en proportion de l'écoulement du temps ; ledit au moins un dispositif de comptage (6, S3, S4 ; 10) étant conçu pour comparer la position de compteur du type de paquet en question avec une valeur de seuil et pour émettre un signal (c4) si ladite valeur de seuil est dépassée, ledit signal étant utilisé par le moyen de commande (7) pour produire un message de compte rendu d'erreur (M).

2. Système de transmission selon la revendication 1, caractérisé en ce que ledit au moins un dispositif de comptage (6, S3, S4 ; 10) est un dispositif du type "bac qui fuit".

3. Système de transmission selon la revendication 1, caractérisé en ce que le dispositif de compte rendu d'erreur (4) comprend un second dispositif d'enregistrement (8, S5, S6 ; 11) pour enregistrer, sous les ordres du dispositif de comptage (6, S3, S4 ; 10) et du moyen de commande (1), le type de paquet des paquets qui ont provoqué le dépassement de la valeur de seuil, dans la mesure où un tel type de paquet n'a pas déjà été enregistré dans ledit second dispositif d'enregistrement, et pour émettre, après un tel enregistrement, un signal vers le moyen de commande pour empêcher l'enregistrement multiple dudit type de paquet dans le second dispositif d'enregistrement, ledit signal étant utilisé par le moyen de commande (7) pour produire un message de compte rendu d'erreur (M).
